# EUROPEAN PATENT SPECIFICATION

(11) **EP 2 089 249 B1**
(45) Date of publication and mention of the grant of the patent: **21.09.2011**
(21) Application number: 07822648.7
(22) Date of filing: 15.11.2007
(51) Int. Cl.: B60N 2/28

(54) **DEVICE FOR OPERATING THE ANCHORING SYSTEM OF AN INFANT SEAT FOR AUTOMOBILES**
VORRICHTUNG ZUR BETÄTIGUNG DES VERANKERUNGSSYSTEMS EINES KINDERSITZES FÜR KRAFTFAHRZEUGE
DISPOSITIF SERVANT À MANOEUVRER LE SYSTÈME D'ANCRAGE D'UN SIÈGE POUR BÉBÉ DANS UN VÉHICULE AUTOMOBILE

(30) Priority: 16.11.2006 ES 200602958
(43) Date of publication of application: 19.08.2009
(73) Proprietor: Play, S.A., 08184 Palau-Solità I Plegamans (ES)
(72) Inventor: JANE STOPP, Joaquín, 08184 Palau-Solità I Plegamans (ES)
(74) Representative: Ponti Sales, Adelaida
(86) International application number: PCT/EP2007/062425
(87) International publication number: WO 2008/059036

(56) References cited:
- EP-A- 0 970 842
- EP-A- 1 083 084
- EP-A- 1 600 325
- EP-A- 1 714 826
- WO-A-03/010024

## Description

The present invention relates to an anchoring system of an infant seat for automobiles, said anchoring system comprising a pair of hooks which are engaged to the automobile seat.

### BACKGROUND OF THE INVENTION

The security infant seats which are used in the automobiles can be anchored to the automobile seat through the seat belt of the automobile itself or by a hooks which are engaged to a rods of the automobile, anchoring system known as Isofix.

The advantage of the Isofix system is that it is more comfortable than using the seat belt of the automobile, however it has the drawback that it is necessary to regulate the position of the seat portion with respect to backrest of the automobile seat. Furthermore, another drawback is that the operating mechanisms of this anchoring system are very heavy and they are not perfectly integrated in the infant seat.

When the seat belt is used it is not necessary to regulate this position, because the backrest of the infant seat rests against the backrest of the automobile seat.

EP 1 600 325 A2, that is considered the closest prior art, discloses a system for anchoring a child safety seat to a vehicle seat, that comprises at least one first member on which a second member is slidable, step-adjusting means for the position of the second member on the first member and a release device carried by the second member and operable to release the second member from the first member.

EP 0 970 842 A1 discloses connecting means for a child safety seat, intended to be connected as an undercarriage to the child seat and comprises a chassis which is intended to be amounted in a stationary position on the seat bottom of a vehicle seat with the child seat facing forward, and on which two connectors are provided for co-operation with a stationary anchoring means available between the seat bottom and the seat back of the vehicle seat, and a carries displaceable on the chassis, which is intended to be connected with the lower slide of the seat bottom of the child seat and allows displacement of the child seat towards and away from the seat back of the vehicle seat.

### SUMMARY OF THE INVENTION

With the operating device of the invention said drawbacks can be solved, presenting other advantages that will be described.

The anchoring system of an infant seat for automobiles of the present invention comprises an operating device that comprises a pair of locking elements which lock the movement of the infant seat with respect to said bars, said locking elements being movable between a locking position and a releasing position against the action of elastic means.

Thanks to this feature, the anchoring system of the infant seat can be operated or released comfortably. Furthermore, the device of the present invention is completely integrated in the infant seat and has a light weight.

Said locking elements are hinged ratchets which engage, in the locking position, with teeth provided in said bars. Therefore, said ratchets only lock the movement of the infant seat in one sense, in the sense of movement of the automobile, and the seat can be moved in the opposed sense, so that the position of the infant seat can be adjusted bridging it closer to the backrest of the automobile.

Said ratchets are hinged in a medium point, defining an engaging end, which engages with said teeth, and a movable end.

Furthermore, the movable end of each ratchet is housed in a groove provided in an intermediate body, also movable between a locking position and a releasing position.

Said intermediate body is linked to a pair of push-buttons, through which it place in the locking or releasing position, which are integral with the push-buttons of said intermediate body.

Advantageously, said elastic means are a spring, which is placed between said intermediate body and a fixed body integral with the infant seat.

### BRIEF DESCRIPTION OF THE DRAWINGS

For a better understanding of what has be exposed, some drawings in .which, diagrammatically and only as a non-limitative example, a practical case of embodiment is shown.
Fig. 1 is a perspective view of the infant seat including the anchoring system of the present invention;
Fig. 2 is a diagrammatical plan view of an infant seat including the anchoring system of the present invention, said device being in its locking position; and
Fig. 3 is as diagrammatical plan view of an infant seat including the anchoring system of the present invention, said device being in the releasing position.

### DESCRIPTION OF A PREFERRED EMBODIMENT

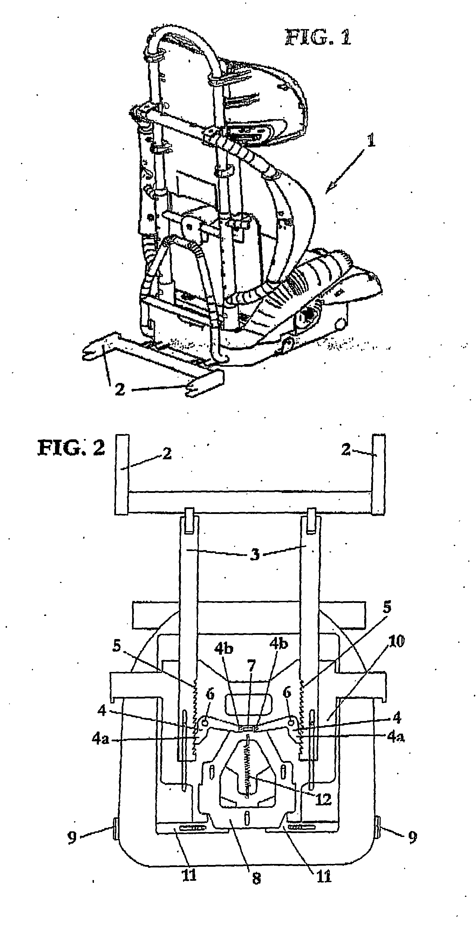

In Fig. 1 an infant seat is shown, indicated generally by the numerical reference 1, comprising a pair of hooks 2 at its rear part, which are engaged in rods integral with the automobile seat (not shown). This anchoring system is usually known as Isofix.

According to the invention, said seat comprises an operating device of this anchoring system, which is used to lock and release the infant seat, so that it remains fixed to the automobile seat or released for its removal.

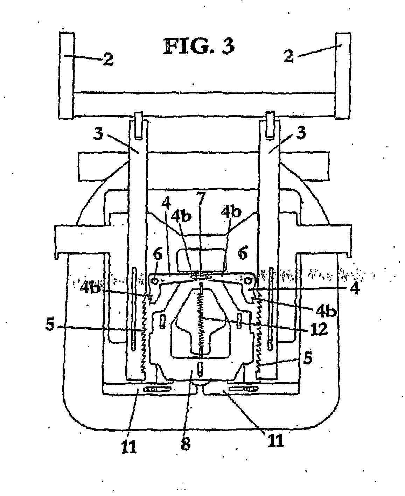

The operating device, of the present invention comprises bars 3 along which the infant seat 1 can move. Said bars 3 comprises teeth 5 which can be engaged with locking elements 4, ratchets in the shown embodiment. Said ratchets 4 are articulated between a locking position (shown in Fig. 2) and a releasing position (shown in Fig. 3) against the action of elastic means 5.

As it can be seen in the figures, said ratchets 4 are articulated in a medium point 6, defining an engaging end 4a, which is engaged with said teeth 5, and a movable end 4b. Said movable end 4b of each ratchet 4 is housed in a groove 7 provided in an intermediate body 8, also movable between a locking position and a releasing position.

Said intermediate body 8 is linked to a pair of push-buttons 9 (shown in Fig. 2), through which the position of the intermediate body is adjusted and, therefore, also the position of the ratchets 4, permitting to drive the hooks and to change the position or the infant seat 1, as will be explained hereinafter.

To this end, said push-buttons 9 are integral with rods 11, linked to the end opposed to the push-buttons 9 to said intermediate body 8.

As it can be seen in Figs. 2 and 3, said elastic means is a spring 12, which is placed between said intermediate body 8 and the fixed body 10 integral with the infant seat 1.

In the locking position shown in Fig. 2, said ratchets 4 are engaged with the teeth 5 of the bars 3, avoiding the removal and the movement of the infant seat 1 in the advancing direction of the automobile. The infant seat 1 can be moved in the opposed direction, denoted by the arrows in Fig. 2, to adjust its position with respect to the backrest of.the automobile seat.

When a user wants to operate the anchoring system, to remove or place the infant seat 1, firstly it is necessary to press both push-buttons 9 at one.

Through the rods 11, this movement of the push-buttons 9 makes the intermediate body 8 to move in the direction denoted by the arrows in Fig. 3, against the pressure of the spring 12.

When the intermediate body 8 moves, it makes said ratchets 4 to rotate, in opposed directions as it can be seen in Fig. 3, when their movable ends 4a move inside the groove 7. When the ratchets 4 rotate, their engaging end 4a moves apart from said teeth 5.

In this releasing position the hooks 2 can be engaged or separated to or from the automobile seat, and also to move the infant seat 1 along the bars 3 in both directions.

Once the push-buttons 9 are released, the spring 12 will make the intermediate body 8 to move back to its locking position, making the ratchets 4 to rotate and to engage with the teeth 5, moving back to the locking position shown in Fig. 2.

Even though reference is made to a particular embodiment of the invention, it is apparent of a person skilled in the art that the operating device described is susceptible of numerous variations and modifications, and that all the cited details can be substituted by other technically equivalent ones, without departing from the scope of protection as defined by the attached claims.

## Claims

1. Anchoring system of an infant seat (1) for automobiles that comprises an operating device, said anchoring system comprising a pair of hooks (2) integral with bars (3) along which the infant seat (1) can move, the operating device comprising a pair of locking elements (4) which lock the movement of the infant seat (1) with respect to said bars (3), said locking elements (4) being movable between a locking position and a releasing position against the action of elastic means (12),
**characterised in that** said locking elements are hinged ratchets (4) which engage, in the locking position, with teeth (5) provided in said bars (3),
**in that** said ratchets (4) are hinged in a middle point (6), defining an engaging end (4a), which engages with said teeth (5), and a movable end (4b),
**in that** the movable end (4b) of each ratchet (4) is housed in a groove (7) provided in an intermediate body (8), also movable between a locking position and a releasing position, and
**in that** said intermediate body (8) is linked with a pair of push-buttons (9), through which its position is adjusted.

2. Operating device according to claim 1, **characterised in that** said push-buttons (9) are integral with rods (11) linked at the opposed end to the push-buttons (9) to said intermediate body (8).

3. Operating device according to claim 1, **characterised in that** said elastic means is a spring (12), which is placed between said intermediate body (8) and a fixed body (10) integral with the infant seat (1).

## Patentansprüche

1. Verankerungssystem eines Kindersitzes (1) für Kraftfahrzeuge, welches eine Betriebsvorrichtung enthält, wobei das Verankerungssystem ein integral mit Stangen ausgebildetes Hakenpaar (2) aufweist, entlang welchen sich der Kindersitz bewegen kann, wobei die Betriebsvorrichtung ein Paar Sperrelemente (4) aufweist, welche die Bewegung des Kindersitzes (1) mit Bezug auf die Stangen (3) sperren, wobei die Sperrelemente zwischen einer sperrenden Position und einer freigebenden Position gegen das Einwirken einer elastischen Vorrichtung (12) bewegbar ist,
**dadurch gekennzeichnet, dass** die Sperrelemente als klappbare Sperrklinken (4) ausgebildet sind, welche in der sperrenden Position mit Zähnen (5), die in den Stangen (3) vorgesehen sind, eingreifen,
dass die Sperrklinken (4) in einem mittleren Punkt (6), der ein Eingriffsende (4a) definiert, welcher mit den Zähnen (5) eingreift, und einem beweglichen Ende (4b) geklappt sind,
dass das bewegliche Ende (4b) jeder Sperrklinke (4) in einer Nut (7), die in einem dazwischen liegenden Körper (8) vorgesehen ist, aufgenommen ist, welches ebenfalls zwischen einer sperrenden Position und einer freigebenden Position bewegbar ist,
dass der dazwischen liegende Körper (8) mit einem Paar Druckknöpfen (9) verbunden ist, durch welche seine Position angepasst ist.

2. Betriebsvorrichtung gemäß Anspruch 1, **dadurch gekennzeichnet, dass** die Druckknöpfe (9) integral mit einem Gestänge (11) ausgebildet sind, die an dem gegenüberliegenden Ende der Druckknöpfe (9) mit dem dazwischen liegenden Körper (8) verbunden ist.

3. Betriebsvorrichtung gemäß Anspruch 1, **dadurch gekennzeichnet, dass** das elastische Mittel als eine Feder (12) ausgebildet ist, die zwischen dem dazwischen liegenden Körper (8) und einem festen Körper (10), der integral mit dem Kindersitz (1) ausgebildet ist, platziert ist.

## Revendications

1. Système d'ancrage d'un siège de bébé (1) destiné à des automobiles, qui comprend un dispositif d'actionnement, ledit système d'ancrage comprenant une paire de crochets (2) formés d'une pièce avec des barres (3) le long desquelles le siège de bébé (1) peut se déplacer, le dispositif d'actionnement comprenant une paire d'éléments de verrouillage (4) qui verrouillent le déplacement du siège de bébé (1) par rapport auxdites barres (3), lesdits éléments de verrouillage (4) étant mobiles entre une position de verrouillage et une position de libération s'opposant à l'action de moyens d'élastiques (12) ;
**caractérisé en ce que** :
lesdits éléments de verrouillage sont des cliquets articulés (4) qui viennent en prise, dans la position de verrouillage, avec des dents (5) disposées dans lesdites barres (3) ;
lesdits cliquets (4) sont articulés à un point médian (6), en définissant une extrémité de mise en prise (4a), qui vient en prise avec lesdites dents (5), et une extrémité mobile (4b);
ladite extrémité mobile (4b) de chaque cliquet, (4) est logée dans une rainure (7) disposée dans un corps intermédiaire (8), également mobile entre une position de verrouillage et une position de libération ; et
ledit corps intermédiaire (8) est relié à une paire de boutons poussoirs (9), par l'intermédiaire desquels sa position est réglée.

2. Dispositif d'actionnement selon la revendication 1, **caractérisé en ce que** lesdits boutons poussoirs (9) sont formés d'une pièce avec des tiges (11), reliées au niveau de l'extrémité opposée aux boutons poussoirs (9) audit corps intermédiaire (8).

3. Dispositif d'actionnement selon la revendication 1, **caractérisé en ce** lesdits moyens élastiques sont constitués par un ressort (12), qui est placé entre ledit corps intermédiaire (8) et un corps fixe (10) formé d'une pièce avec le siège de bébé (1).
